# EUROPEAN PATENT APPLICATION

(11) **EP 1 076 307 A2**
(43) Date of publication of application: **14.02.2001**
(21) Application number: 00305178.6
(22) Date of filing: 19.06.2000
(51) Int. Cl.: G06F 17/60

(54) **Computer system for providing travel services**

(30) Priority: 10.08.1999 GB 9918692
(71) Applicant: International Computers Ltd., London, EC2A 1SL (GB)
(72) Inventor: Bunyan, Roy James, Hampshire, RG27 0PT (GB); Stokes, Christopher John, Berkshire, RG42 3SH (GB); Tull, Graham, Berkshire, SL1 2GD (GB)
(74) Representative: Guyatt, Derek Charles

(57) **Abstract**

A computer system provides a range of travel related services for customers. Customers state a series of preferences, including opinions on different destinations and types of holiday, which are stored in a central database. Based on these preferences, the system determines a suitability rating for each holiday stored in it. Customers can search for holidays, determined by the suitability ratings. They can also view the suitability ratings for holidays reviewed in mass-media sources, such as television travel shows. A further feature enables customers to estimate the amount of money they may spend on their holiday, based on the number of travellers, the duration of the holiday and a series of questions relating to what they will do on their holiday.

## Description

### Background to the invention

This invention relates to a computer system and method for providing travel services.

Consumers wishing to book a holiday find a large array of information available to them, including holiday brochures from numerous companies and reviews and recommendations in broadcast travel shows, newspapers, and magazines. To assist consumers in finding suitable holidays, various computerized holiday searching facilities have been proposed or are already in use. In general, these are focused around searching on a particular destination or a specific holiday type.

The object of the present invention is to provide a computerized travel service, which gives consumers information and advice about holidays in a novel manner.

### Summary of the Invention

According to the invention, a computerized method of providing travel-related services comprises the steps:
(a) storing, in a reviews database, information relating to holidays reviewed in a number of mass-media sources;
(b) storing user holiday preferences in a user preferences database;
(c) displaying a list of holidays stored in said reviews database; and
(d) indicating the suitability of each holiday in the list, based on the stored user preferences.

It will be seen that the invention allows a user to view a list of holidays that have featured, or will feature, in various mass-media sources (such as television holiday programs, or newspaper or magazine articles), and to see how these holidays rate against the user's expressed preferences. The invention thus provides a useful service, by advising users on the suitability of such holidays. Preferably, the system also allows the user to view details of similar holidays to those featured in the mass-media sources.

### Brief Description of the Drawings

Figure 1 is a block diagram of a computer system embodying the invention.
Figure 2 to 9 are schematic representations of screen displays used in the system.

### Description of an Embodiment of the Invention

One embodiment of the invention will now be described by way of example with reference to the accompanying drawings.

The embodiment described is designed to be operated using a remote access channel such as the Internet or Interactive Television.

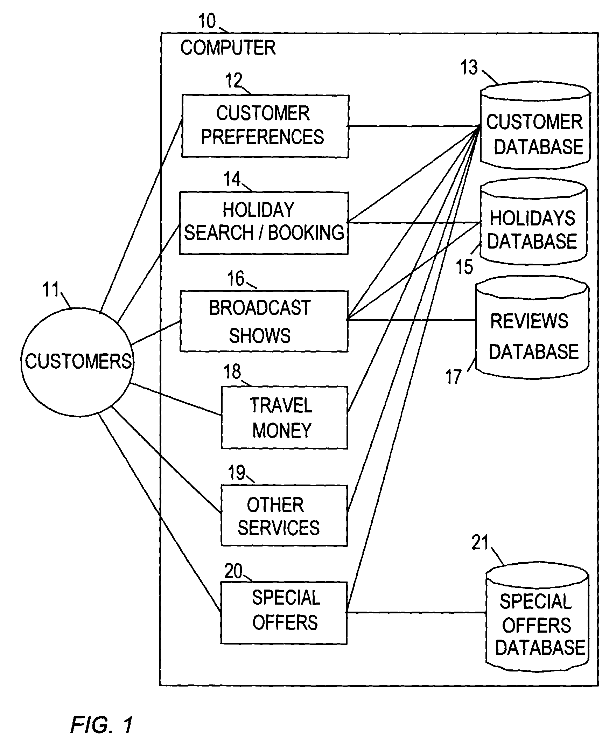

Figure 1 shows a computer system 10, which provides the service to a number of customers 11 on behalf of one or more travel companies participating in the system.

The system includes the following databases:
- Customer database 13. This stores details of customers' holiday preferences.
- Holidays database 15. This stores information about holidays provided by the travel companies.
- Reviews database 17. This stores information about holidays reviewed in selected travel shows, e.g. television holiday shows. Typically, these include shows that have been broadcast recently, but may also include shows that are scheduled to be broadcast in the near future, if such details are available. As well as television shows, information from other mass-media sources such as newspaper and magazine articles may also be included.
- Special offers database 21. This stores information about late availability and special offer holidays.

Customers 11 can access the following modules within the computer system 10:
■ Customer preferences module 12. This enables customers to enter and update their holiday preferences. This information is stored in the customer database 13.
■ Holiday search and booking module 14. This searches the holidays database 15 for holidays, and rates them against a particular customer's preferences, as stored in the customer database 13. This module also enables on-line booking of holidays.
■ A broadcast shows module 16. This searches the reviews database 17 for holidays that have been reviewed, and rates them against a particular customer's preferences, as stored in the customer database 13.
■ Travel money module 18. This arranges and advises customers on travel money.
■ Other travel services module 19. This obtains quotations for and buys other travel services, such as travel insurance.
■ Special offers module 20. This assesses the suitability of late availability and special offer holidays, stored in the special offers database 21, and advises the customers of suitable special offer holidays.

In operation, the customer accesses the system, e.g. over the Internet, and enters the appropriate customer identifier (e.g. customer number) and authentication information (e.g. passcode).

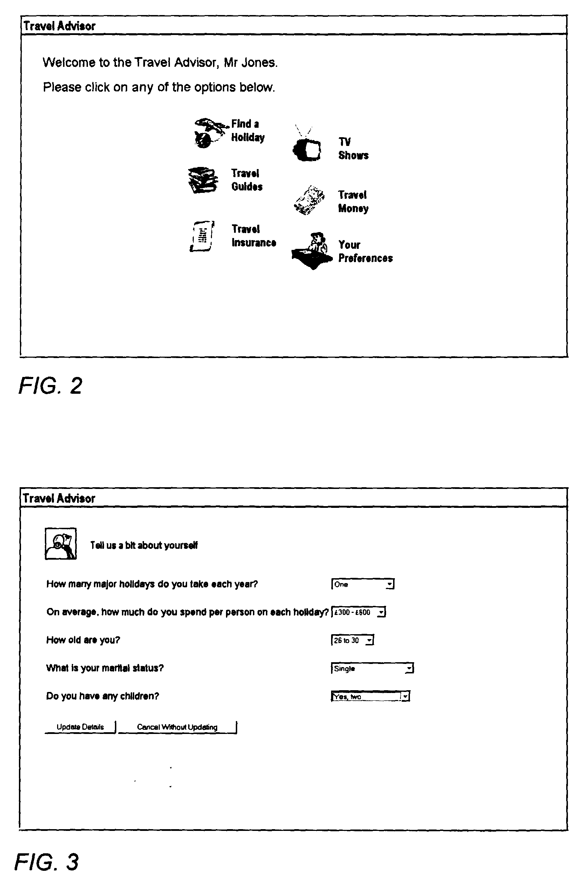

The customer is then presented with a menu of available options, as shown in Figure 2. This includes the following options:
- Find a holiday
- TV shows
- Travel guides
- Travel money
- Travel insurance
- Your preferences.

Selecting the "Your preferences" option activates the customer preferences module 12. This displays a set of customer preferences screens, as shown in Figures 3-5. This module is automatically activated on a customer's first visit to the service, to allow the customer to enter their preferences. On subsequent visits, if required, customers can use this option to view or update their previously entered preferences. The preferences are stored in the customer database 13.

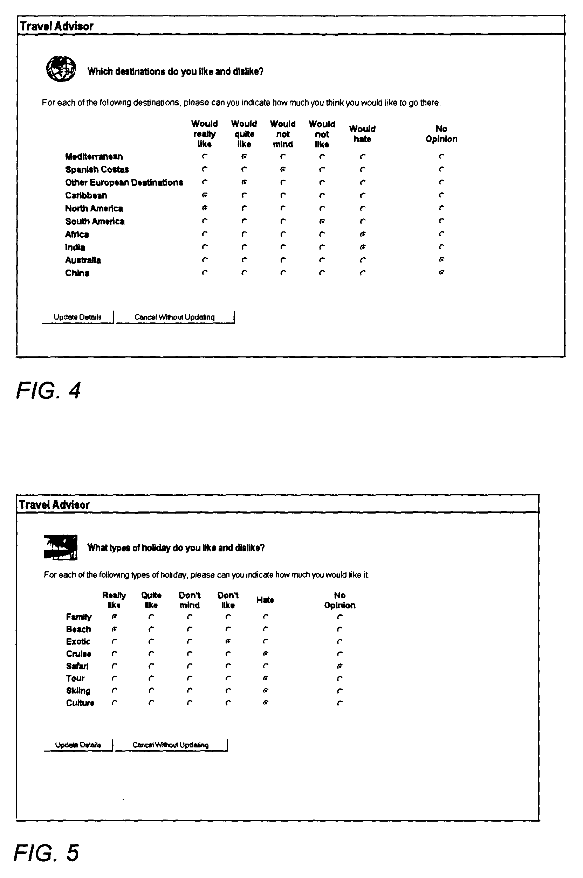

The customer preferences screens include:
■ Personal information including age, sex, marital status, children's details, average number of holidays booked per year and average spending per person on holidays, as shown in Figure 3.
■ Previous locations visited by the customer (not shown).
■ Opinions and preferences on holiday destinations, as shown in Figure 4.
■ Opinions and preferences on types of holiday, as shown in Figure 5.

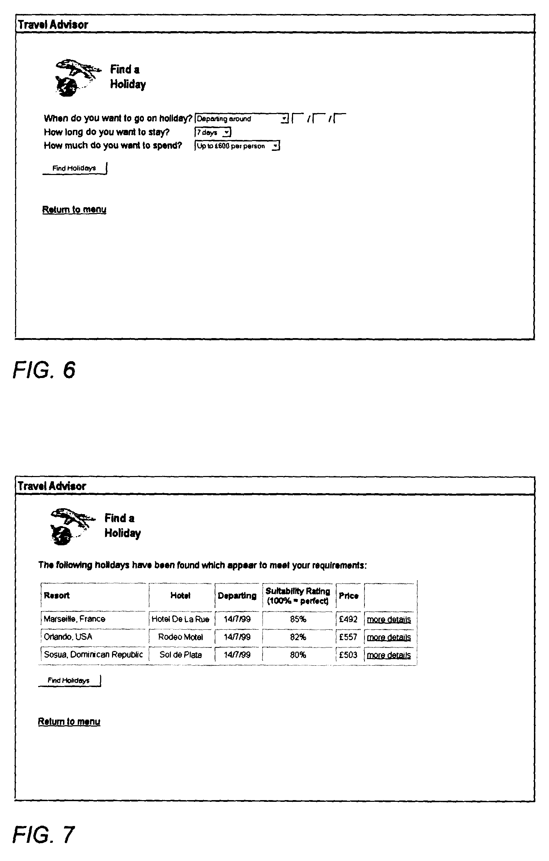

On the screens shown in Figures 4 and 5, customers are able to specify "No Opinion" on particular preferences. The system is able to evaluate the suitability of holidays intelligently based on incomplete information, although greater confidence in results will be obtained with complete information. Selecting the "Find a holiday" option accesses the holiday search module 14. This presents the customer with a screen as shown in Figure 6. In this screen, customers stipulate the date or dates they are planning to go on holiday, the duration, and the amount they wish to spend. The search module 14 then searches the holidays database 15 to find the best matches.

The suitability rating of a holiday is based on:
■ The location. The specific location of the holiday, e.g. Marseilles, is mapped on to a more general regional location, e.g. Mediterranean, to match with the customer preferences. If a customer has specified a positive or negative preference for a regional location, a weighting based on their strength of opinion is added to the overall suitability of the holiday. This weighting can be increased in magnitude dependent on the frequency with which the customer has visited the location in the past. For example, a customer who has never visited Australia but who specifies that they "Would like" to go there might score +10 for this, whereas a customer who has visited Australia many times and specifies that they "Would like" to go there might score +40 for this.
■ The type of holiday. In the holidays database, there are fields indicating how suitable the holiday is against the types of holiday from the customer preferences screens. Each holiday will be totally unsuitable against most categories: for example, a resort based beach holiday will be unsuitable against the categories of skiing, cruise, tour, adventure and so on. However, some holidays will fit in to multiple categories, e.g. beach and family, and twin centre holidays similarly may have ratings against different categories.

In addition, a confidence rating is calculated, indicating how confident the system is in the suitability rating given for the holiday. This is calculated based on:
■ The number of "No opinion" responses specified in the customer preferences.
■ Confidence ratings stored for each holiday destination. These may be based on how long the travel company has been using the hotel concerned, and/or whether the ratings were compiled by the hotel owner or the travel company.
This confidence rating is either used to modify the suitability, or is shown alongside it.

Optionally, the suitability rating can be normalised and expressed in a format which is easy to understand, e.g. a percentage from 0% (totally unsuitable) to 100% (totally suitable).

When the holiday search module assesses the available holidays, it determines the most suitable ones based on the suitability ratings, optionally together with the confidence ratings.

These are presented to the customer in a screen as shown in Figure 7. The customer can then browse further details about individual holidays. If there are more than a specified number of suitable holidays, the customer is able to sort or filter the holidays using a set of criteria including destination area and price. From the screen of further details, the customer is preferably able to arrange online booking of the holiday.

Preferably, customers are able to add their comments and/or ratings on a destination or hotel, such comments/ratings to be viewable by other customers. Customers are encouraged to provide such ratings, in particular upon their return from a holiday, and incentives such as discount vouchers for future holidays or loyalty points can be offered in return for completion of ratings. Customers are then also able to identify holidays that other customers with similar preferences to their own have taken and recommended.

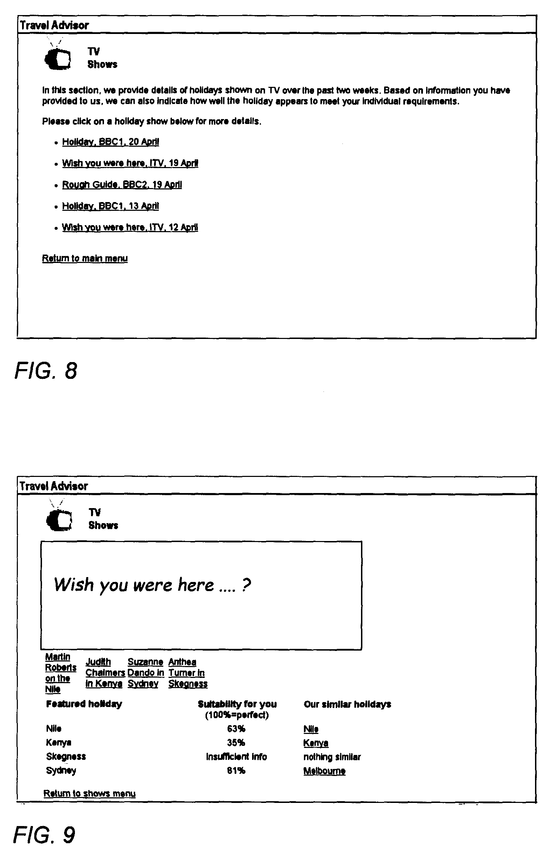

Selecting the "TV shows" option activates the module 16. This accesses the reviews database 17, and displays a screen as shown in Figure 8, listing recently broadcast television holiday shows, or shows that are to be broadcast in the near future. Customers can access information about a relevant show by clicking on the appropriate programme title, which displays a screen similar to Figure 9.

For each holiday featured on the selected show, the system displays a suitability rating for the holiday based on the customer's preferences and calculated as above, together with a link to details of similar holidays provided by the travel company or companies participating in the system. Customers are able to click on the suitability rating given to obtain a breakdown of how it was derived, i.e. which factors gave positive and negative ratings towards the overall suitability rating.

Selecting the "Travel money" option activates the travel money module 18. This enables customers to find information about and purchase currency and travellers cheques. One feature of this permits the customer to find out the most appropriate way to take travel money for the destination selected.

In addition, a feature is included which enables customers to work out how much currency they may need to take. After specifying the destination they are visiting, the customer is asked how many adults and children will be travelling, and for how long they will be staying. The customer is then presented with a series of questions, including:
■ Will they be hiring a car for part or all of the holiday?
■ Will they be going on many excursions?
■ Where will they be eating, e.g. in the hotel as part of the package price, in economy restaurants, in mid-price restaurants, in expensive restaurants or self-catering?

Against each question there is a set of answer options, and each option has a cost associated with it for the specific destination, either as a duration based cost, e.g. car hire, or a person and duration based cost, e.g. meals, which is broken down into adult cost and child cost.

For duration based costs, the cost is multiplied by the duration of the holiday and by a factor based on the answer option selected. For example, car hire may cost $50 per day, and for a 10 day break with car hire for the entire duration, the calculation would be $50 x 10 days x 100% giving $500. Alternatively, if the car hire had been for "a few days", the calculation would be $50 x 10 days x 30% giving $150.

For person and duration based costs, the adult cost is calculated in a similar way by multiplying the adult cost by the number of adults by the duration by a factor based on the answer option selected; the child cost is calculated similarly, and these are added together. For example, the cost for two adults and one child eating in mid-priced restaurants most of the time on a 10 day holiday could be calculated as follows (based on an adult meal cost of $20 per person and a child meal cost of $15 per person):
Adults: $20 x 2 adults x 10 days x 70% = $280
Child: $15 x 1 child x 10 days x 70% = $105
Total cost: $280 + $105 = $385
These amounts are added together, along with additional person and duration based costs for snacks, entertainment etc, to arrive at a figure for the total estimated cost of holiday spending.

Other services accessible from the main menu (Figure 2) include travel guides and travel insurance, which are similar to the existing services available from travel companies and financial institutions.

In parallel with the online service accessed by customers, a process also runs on a regular basis analysing late availability holidays and other special offers on behalf of registered customers. For each customer, the process determines suitability ratings for these holidays as described above, and either sends a regular e-mail message to the customer listing the most suitable offers, or advises the customer whenever a holiday is found where the suitability rating is above a predefined threshold. The process also advises customers if a holiday to be featured on a television travel show in the near future would be particularly suitable for their requirements.

### Some Possible Modifications

It will be appreciated that many modifications may be made to the system described above without departing from the scope of the present invention.

An alternative embodiment is for the one or more databases of holiday details to be maintained by travel companies, and for the system to interface with these rather than using a central database of these details.

Rather than using the suitability rating mechanism detailed above, an intelligent software agent can be used to analyse the holiday descriptions to determine suitability.

The facility of the system relating to broadcast shows can utilise Interactive Television or a similar mechanism to provide suitability ratings whilst the show is being broadcast.

## Claims

1. A computerized method of providing travel-related services, comprising the steps:
(a) storing, in a reviews database (17), information relating to holidays reviewed in a number of mass-media sources;
(b) storing user holiday preferences in a user preferences database (13);
(c) displaying a list of holidays stored in said reviews database (17); and
(d) indicating the suitability of each holiday in the list, based on the stored user preferences.

2. A method according to Claim 1, further including enabling the user to view details of holidays similar to those reviewed in the mass-media sources.

3. A method according to Claim 1 or 2, wherein the mass-media sources comprise broadcast holiday shows.

4. A method according to Claim 3, further including enabling the user to view the suitability of holidays featured on a broadcast travel show whilst the show is being broadcast.

5. A method according to any preceding claim wherein the mass-media sources include holiday shows scheduled to be broadcast in the future.

6. A method according to any preceding claim, using Interactive Television to enable the user to view the suitability of the holidays.

7. A method according to any preceding claim, further including displaying details of special-offer and late-availability holiday deals.

8. A method according to any preceding claim, further including enabling users to book holidays whose details are displayed.

9. A method according to any preceding claim, further including advising users of the most suitable holidays by electronic mail.

10. A method according to any preceding claim, further including enabling users to identify the most appropriate currency and travellers cheques to take to a selected destination, advising the user on how much holiday money they are likely to need, and enabling users to order or be reminded to order currency and travellers cheques.

11. A method according to any preceding claim, further including enabling users to purchase travel insurance.

12. A method according to any preceding claim, further including enabling users to rate and comment on holiday destinations, and making such ratings and comments viewable by other users.

13. A method according to Claim 12, further including enabling users to identify holidays that other users with similar preferences have taken, and to read the ratings and comments of those other users on such holidays.

14. A computer-automated method comprising
(a) enabling users to identify the most appropriate currency and travellers cheques to take to a selected destination,
(b) advising the user on how much holiday money they are likely to need, and
(c) enabling users to order or be reminded to order currency and travellers cheques.

15. A computer system for providing travel-related services, comprising:
(a) means for storing, in a reviews database (17), information relating to holidays reviewed in a number of mass-media sources;
(b) means for storing user holiday preferences in a user preferences database (13);
(c) means (16) for displaying a list of holidays stored in said reviews database; and
(d) means for indicating the suitability of each holiday in the list, based on the stored user preferences.

16. A computer system according to Claim 15, further including means for enabling the user to view details of holidays similar to those reviewed in the mass-media sources.

17. A computer system according to Claim 15 or 16, wherein the mass-media sources are broadcast holiday shows.

18. A computer system according to Claim 16, further including means for enabling the user to view the suitability of holidays featured on a broadcast travel show whilst the show is being broadcast.

19. A computer system according to any of Claims 15 to 18 wherein the mass-media sources include holiday shows scheduled to be broadcast in the future.

20. A computer system according to any of Claims 15 to 19, using Interactive Television to enable the user to view the suitability of the holidays.

21. A computer system according to any of Claims 15 to 20, further including means for displaying details of special-offer and late-availability holiday deals.

22. A computer system according to any of Claims 15 to 21, further including means for enabling users to book holidays whose details are displayed.

23. A computer system according to any of Claims 15 to 22, further including means for advising users of the most suitable holidays by electronic mail.

24. A computer system according to any of Claims 15 to 23, further including means for enabling users to identify the most appropriate currency and travellers cheques to take to a selected destination, means for advising the user on how much holiday money they are likely to need, and means for enabling users to order or be reminded to order currency and travellers cheques.

25. A computer system according to any of Claims 15 to 24, further including means for enabling users to purchase travel insurance.

26. A computer system according to any of Claims 15 to 25, further including means for enabling users to rate and comment on holiday destinations, and means for making such ratings and comments viewable by other users.

27. A computer system according to Claim 26, further including means for enabling users to identify holidays that other users with similar preferences have taken, and to read the ratings and comments of those other users on such holidays.

28. A computer-automated system comprising:
(a) means for enabling users to identify the most appropriate currency and travellers cheques to take to a selected destination,
(b) means for advising the user on how much holiday money they are likely to need, and
(c) means for enabling users to order or be reminded to order currency and travellers cheques.
